# EUROPEAN PATENT APPLICATION

(11) **EP 2 882 078 A1**
(43) Date of publication of application: **10.06.2015**
(21) Application number: 13195888.6
(22) Date of filing: 05.12.2013
(51) Int. Cl.: H02K 1/27

(54) **Electrical machine with a permanent magnet and a coil**

(71) Applicant: Siemens Aktiengesellschaft, 80333 München (DE)
(72) Inventor: Thomas, Arwyn, Cheshire, SK8 6HW (GB)

(57) **Abstract**

The invention relates to an electrical machine, which comprises at least one permanent magnet and at least one coil (23). The permanent magnet and the coil (23) are configured to move relative to each other and are coupled by a magnetic flux during the relative movement to each other. A magnetic vector field (32) in the permanent magnet and the coil (23) is generated due to the magnetic flux. The permanent magnet is separated by the coil (23) by a main gap (31). Furthermore, the permanent magnet comprises a main gap facing surface portion. The main gap facing surface portion of the permanent magnet is at least partially covered by a layer (15) for concentrating the magnetic vector field in the permanent magnet and the coil (23), thus increasing the magnetic flux between the permanent magnet and the coil (23). Exemplarily, the layer (14) comprises a ferrous material.

## Description

### FIELD OF THE INVENTION

The invention relates to an electrical machine comprising a permanent magnet and a coil. In particular, the permanent magnet and the coil are arranged such that they are movable relative to each other. Furthermore, they are coupled by a magnetic flux during the relative movement to each other.

### BACKGROUND OF THE INVENTION

The magnitude of the magnetic flux between a permanent magnet and a coil is a key parameter of an electrical machine. In most applications of an electrical machine a high magnetic flux between both components, i.e. the permanent magnet and the coil is desired. A reduction of the magnetic flux can be caused by various reasons.

An electrical machine comprises on the one hand an electric motor for converting electrical energy into mechanical energy. On the other hand, it comprises a generator for generating electricity from mechanical energy. The electrical machine comprises at least two components; a first component comprising at least one permanent magnet and a second component comprising at least one coil. In practice, the electrical machine usually comprises a plurality of permanent magnets and a plurality of coils.

First, the reduced magnetic flux may be due to a large air gap between the permanent magnet and the coil. Thus, efforts to minimize the air gap are in general beneficial for the efficiency of the electrical machine.

A second reason for a reduced magnetic flux between the permanent magnet and the coil is an open topology of the component which comprises the coil. For instance, if the electrical machine comprises a stator comprising the coil and a rotor comprising the permanent magnet, an open stator topology may be the reason for a reduced magnetic flux between the stator and the rotor. In this case, the magnetic flux can be increased by arranging, i.e. providing, a tooth tips on top of stator tooth. However, providing tooth tips may be problematic if preformed coils, i.e. coils that are manufactured entirely before inserting them into the stator, are used.

A way to avoid a reduced magnetic flux between the permanent magnet and the coil is the provision of embedded magnets. Embedded magnets allow improved magnet retention and an increase of the saliency ratio of an electrical machine. However, a drawback of embedded magnets is its difficult and complex manufacturing process.

Thus, it would be desirable to provide an improved way to increase the magnetic flux between a permanent magnet of a first component of an electrical machine and a coil of a second component of the electrical machine.

### DESCRIPTION OF THE INVENTION

This aim is achieved by the independent claim 1. Advantageous embodiments are described in the dependent claims.

In accordance with the invention there is provided an electrical machine, which comprises at least one permanent magnet and at least one coil. The permanent magnet and the coil are configured to move relative to each other and are coupled by a magnetic flux during the relative movement to each other. A magnetic vector field in the permanent magnet and the coil is generated due to the magnetic flux. The permanent magnet is separated by the coil by a main gap. Furthermore, the permanent magnet comprises a main gap facing surface portion. The main gap facing surface portion of the permanent magnet is at least partially covered by a layer for concentrating the magnetic vector field in the permanent magnet and the coil, thus increasing the magnetic flux between the permanent magnet and the coil.

The electrical machine comprises on the one hand an electric generator for converting mechanical energy into electrical energy. In other words, the electric generator generates electricity. In the context of this application, the electric generator is also briefly referred to as a generator. On the other hand, the electrical machine comprises an electric motor for converting electrical energy into mechanical energy.

A permanent magnet is made from material that is magnetized and creates its own persistent magnetic field. The material may be a ferromagnetic or ferrimagnetic material. Examples of ferromagnetic materials are iron, nickel, cobalt or some alloys of rare earth metals.

A permanent magnet is also referred to as a hard magnetic material. In general, a hard magnetic material remains magnetized even without an external magnetic field. In other words, a permanent magnet generates itself a magnetic vector field.

The coil is characterized by a high electrical conductivity. The coil may be preformed, which signifies that the coil is entirely manufactured before being inserted into the electrical machine. Exemplarily, the electrical machine may comprise a stator and a rotor. In this case, the stator may comprise several stator teeth which are encompassed by coils, respectively. Then, in the case of a preformed coil the coil already features the shape, in particular the final shape, for encompassing the stator tooth. Alternatively, the coil may be formed in situ. This signifies that the coil is wound around the stator tooth after being inserted to the electrical machine.

In the case that a coil encloses a stator tooth, the stator tooth may act as a coil core. Then, the stator tooth which acts as the coil core is a part of the coil. In other words, the magnetic field is not only present in the permanent magnet and the coil as such, but also in the stator tooth acting as the coil core.

During operation of the electrical machine, the permanent magnet and the coil are moving relative to each other. This relative movement may be a translatory, i.e. a linear movement. If the electrical machine is an electric motor and the permanent magnet and the coil perform a translatory movement relative to each other, the electrical machine is also referred to as a linear motor.

The relative movement of both components, i.e. the coil and the permanent magnet, may also be a rotational movement. In this case, one component, which is usually referred to as a rotor, rotates about the other component, which is usually referred to as a stator.

Finally, also an oscillatory movement of the coil relative to the permanent magnet is possible.

As the permanent magnet and the coil move relative to each other during operation of the electrical machine, they are not allowed to be tightly connected or fixed to each other. Moreover, they are separated by a gap. Obviously, the electrical machine as a whole may comprise several gaps at several locations. Thus, the gap between the permanent magnet and the coil is referred to as the main gap. The main gap may be filled with air, or at least it may comprise air. Thus, the main gap may also be referred to as the air gap. Typically, the dimension, or extension, of the main gap is several orders of magnitudes smaller than the dimension, or extension, of the whole electrical machine. Exemplarily, if the electrical machine is a rotationally symmetrical generator with a diameter of a few meters, e.g. 5 m (meters), then the main gap could only have a dimension of several millimeters, for instance 5 mm (millimeters).

The permanent magnet may have a plurality of surface portions. If, for instance, the permanent magnet has the shape of a cuboid, six surface portions may be assigned to the permanent magnet. The main gap facing surface portion is defined to be the surface portion which is facing the main gap. If, for instance, the electrical machine is a rotationally symmetrical generator, wherein the rotor is further away from an axis of rotation than the stator, and the permanent magnets are attached to the rotor at a rotor yoke, then the surface portion which is connected to the rotor yoke is opposite to the main gap facing surface portion. Such an arrangement is also referred to as an electrical machine with surface mounted magnets. As it will become clear in the description of advantageous embodiments and the respective drawings, the surface portion which is relevant for being treated or modified in the light of this invention is the main gap facing surface portion of the permanent magnet.

This main gap facing surface portion is partially or fully covered by the layer for concentrating the magnetic vector field in the permanent magnet and the coil. The layer is a means for conducting the magnetic flux, which results in an increase of the magnetic flux between the permanent magnet and the coil. In other words, an important aspect of the invention is that the magnetic vector field is concentrated or focused by conducting the magnetic flux towards a region of the permanent magnet which is opposite to, for instance, the coil and/or the stator tooth.

In a first embodiment, the average thickness of the layer is smaller than 20 per cent, in particular smaller than 5 per cent, with regard to the average thickness of the permanent magnet on which the layer is applied.

The thickness of the layer and the thickness of the permanent magnet are both to be measured perpendicular to the direction of the relative movement of the permanent magnet and the coil. If, for example, the electrical machine comprises a rotor with a substantially rotationally symmetric shape and the relative movement between the coil and the permanent magnet is a rotational movement, then the thickness of the layer and the thickness of the permanent magnet are to be determined in a direction which is radially extending from the axis of rotation of the rotor.

If the permanent magnet is only partially covered by the layer, then the average thickness of the layer has only to be calculated from the covered part of the permanent magnet. If, for example, the average thickness of the permanent magnet is 10 cm (centimeters), then the average thickness of the layer which is applied to the permanent magnet on the main gap facing surface portion could be in the range between 100 and 500 µm (micrometers).

In another advantageous embodiment, the main gap facing surface portion is fully covered by the layer.

A full coverage of the main gap facing surface portion by the layer is beneficial as the permanent magnet is constantly changing its relative position with regard to the coil. As it is beneficial to optimize, i.e. to maximize, the magnetic flux under operation in any position of the permanent magnet and the coil relative to each other, it is advantageous to cover the main gap facing surface portion fully by the layer.

In another advantageous embodiment, the layer comprises a relative permeability of greater than 10, in particular of greater than 100.

In other words, it is advantageous if the layer has a low electrical conductivity.

In another advantageous embodiment, the layer comprises metal, in particular iron.

In the particular embodiment of the layer comprising iron, the layer is also referred to as a flux focusing ferrous layer. An advantage of iron is that it is readily available, well-known and well-suited to build the flux focusing layer, thus.

In another advantageous embodiment, the layer comprises a coercivity below 10 A/m (Ampere per meter), in particular below 1 A/m.

In other words, the layer beneficially comprises a soft magnetic material. Compared to the hard magnetic material, which is able to generate a magnetic vector field itself, the soft magnetic material of the layer has its important purpose of conducting the magnetic flux and concentrating it in a beneficial way. A soft magnetic material is characterized by a coercivity which is relatively small; implying that without an external magnetic field the material is fully or at least substantially demagnetized.

In another advantageous embodiment, the layer reduces the impact of a demagnetizing field on the permanent magnet.

The demagnetizing field, which is also referred to as a stray field, acts on the permanent magnet such that the total magnetic moment of the permanent magnet is reduced. In particular, the demagnetizing field originates at the coil under heavy lead and/or short circuit conditions. It is thus another advantage of the flux concentrating layer to reduce the impact of the demagnetizing field on the permanent magnet.

In another advantageous embodiment, the relative movement of the permanent magnet and the coil is a translatory movement.

In particular, the electrical machine may be a linear motor. A linear motor is an electric motor that has its stator and rotor unrolled so that instead of producing a rotation it produces a linear force along its length. One example of a linear motor is a Lorentz' type actuator, in which the applied force is linearly proportional to the electrical current and the magnetic field.

In another advantageous embodiment, the relative movement of the permanent magnet and the coil is a rotational movement.

In another advantageous embodiment, the permanent magnet is a part of a rotor, the latter comprising a substantially rotationally symmetric shape. The coil is a part of a stator, the latter comprising a substantially rotationally symmetric shape. The rotor and the stator are arranged such with regard to each other that their respective axis of symmetry substantially coincide. Thus, a common axis of symmetry is defined. Finally, the rotor is rotatable mounted with regard to the stator.

In other words, each of the rotor and the stator comprises a substantially rotationally symmetric shape and each of the rotor and the stator comprises an axis of symmetry. These axes of symmetry substantially coincide. During operation of the electrical machine the rotor rotates about the common axis of symmetry.

In another advantageous embodiment, the rotor is arranged closer to the common axis of symmetry compared to the stator.

A rotor which is arranged in such a manner compared to the stator is also referred to as an internal rotor.

However, it may also be advantageous, to arrange the rotor further away from the common axis of symmetry compared to the stator.

In this arrangement, the rotor is referred to as an external rotor.

In another advantageous embodiment, the stator comprises at least one stator tooth and the stator tooth is enclosed by the coil such that is acts as a coil core.

Advantageously, the electrical machine comprises a plurality of stator teeth, each of the stator teeth being enclosed by a coil. The stator tooth can be described as a notch which extends away from a stator core which is connected to the tooth. The stator tooth may have substantially the shape of a cuboid. The stator tooth may have a tooth tip which is arranged at the side of the stator tooth which is facing the main gap. One task of the tooth tip is prevention of the coil to slip out during operation.

In another advantageous embodiment, the coil is a preformed coil.

A coil is referred to as a preformed coil if it is manufactured separately before being inserted into the stator. An advantage of a preformed coil is ease of manufacturing.

An alternative to a preformed coil is a coil which is wound in situ around the stator tooth. Using a coil which is wound in situ around the stator tooth may have the advantage of realizing a more individual design but may be more complex during manufacturing of the stator.

In another advantageous embodiment, the electrical machine is a generator for generating electricity.

Alternatively the electrical machine may be an electric motor for converting electrical energy into mechanical energy.

In another advantageous embodiment the electrical machine is a part of a wind turbine.

Particularly in wind turbines, efficiency and a compact design of the generator is of high importance. Thus, introducing a layer for concentrating the magnetic vector field in the permanent magnet and the coil and thus increasing the magnetic flux between these components is highly beneficial.

### BRIEF DESCRIPTION OF THE DRAWINGS

Embodiments of the invention are now described, by way of example only, with reference to the accompanying drawings, of which:
- Figure 1: shows a rotor and a stator separated by a main gap;
- Figure 2: shows a plurality of surface mounted magnets with a layer for concentrating a magnetic vector field;
- Figure 3: shows a magnetic vector field between a surface mounted magnet and a stator tooth; and
- Figure 4: shows a magnetic vector field between a surface mounted magnet comprising a layer for concentrating the magnetic vector field and a stator tooth.

The illustration in the drawings is schematically. It should further be noted that numerals which refer to similar features or elements are referred to with the same numeral throughout the drawings.

### DESCRIPTION OF THE DRAWINGS

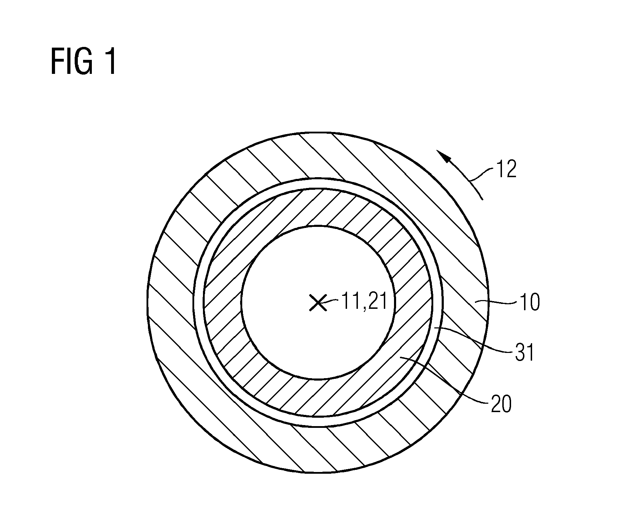

Figure 1 shows a rotor 10, which is rotationally symmetric about a rotor axis of symmetry 11. Similarly, a stator 20 comprises a rotationally symmetric shape about a stator axis of symmetry 21. The rotor axis of symmetry 11 and the stator axis of symmetry 21 coincide. The rotor 10 and the stator 20 are arranged such with regard to each other that they are separated by a main gap 31. The width of the main gap 31, defined by the extension, or dimension, of the main gap 31 in a radial direction with regard to the axis of symmetry 11, 21 is small against the diameter of the rotor 10. In particular, the width of the main gap 31 is smaller than one order of magnitude compared to the outer diameter of the rotor 10. Finally, the rotor 10 is arranged and prepared for being rotated about the rotor axis of symmetry 11 in a rotational direction 12.

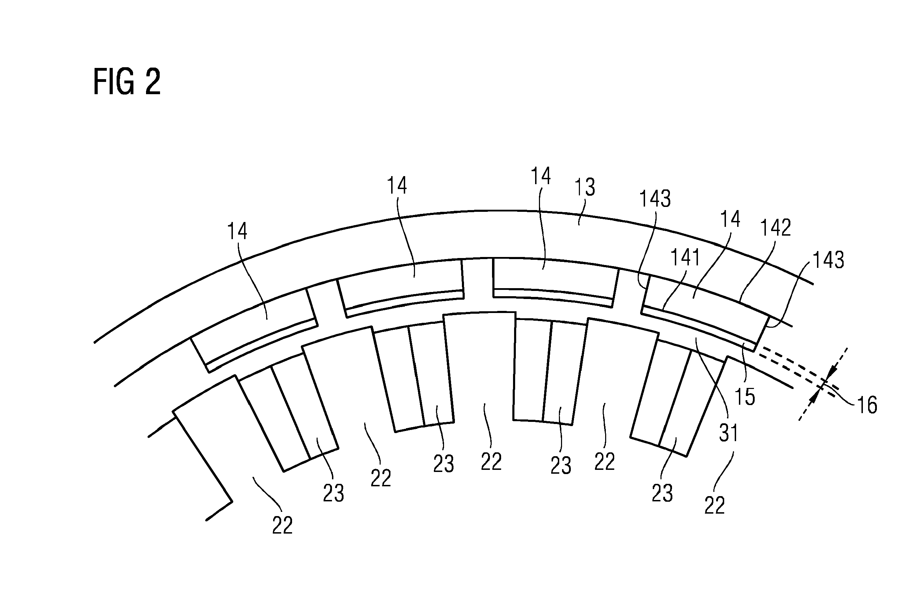

Figure 2 shows a part of a rotor and a stator. The rotor, which is an external rotor in the example of Figure 2, comprises a rotor yoke 13. A plurality of surface mounted magnets 14 are attached to the rotor yoke 13. Each of the surface mounted magnets 14 is a permanent magnet. In other words, the surface mounted magnets comprise hard magnetic material. Each of the surface mounted magnets 14 comprises a main outer surface portion 141, a main inner surface portion 142 and two side surface portions 143. The main outer surface portion 141 is also referred to as the main gap facing surface portion. Upon the main outer surface portion 141 a layer 15 is applied. The layer 15 is applied fully on the main outer surface portion 141; however, it does not cover the side surface portions 143.

A stator is positioned opposite to the surface mounted magnets 14. The stator comprises a plurality of stator teeth 22. Each pair of stator teeth 22 is separated by a stator slot. Each stator slot is filled with a coil 23. Each coil 23 encompasses one stator tooth 22. The stator teeth 22 do not comprise any tooth tips, thus preformed coils may advantageously be used.

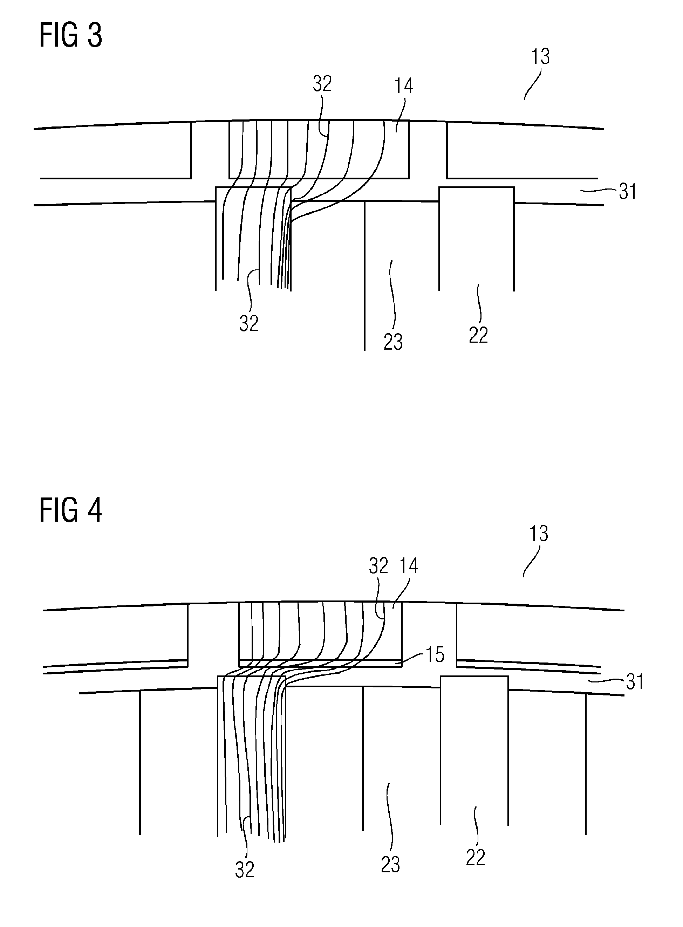

Figure 3 shows a surface mounted magnet 14 which is connected and attached to a rotor yoke 13. Opposite to the surface mounted magnet 14 is a stator tooth 22. The stator tooth 22 is separated by a main gap 31 from the surface mounted magnet 14. During rotation of the rotor yoke 13 with the surface mounted magnets 14 relative to the stator with the stator teeth 22 which are encompassed by coils 23, a magnetic flux between the surface mounted magnet 14 and the coil is generated. Due to the magnetic flux a magnetic vector field in the surface mounted magnet 14 and the coil 23 is generated. The magnetic vector field 32 can be visualized by magnetic vector field lines shown in Figure 3. Note that the strength of the magnetic vector field 32 is characterized by the distance between adjacent magnetic vector field lines.

In Figure 4, the same arrangement as shown in Figure 3 is illustrated except from the fact that a layer 15 is applied on a main gap facing surface portion of the surface mounted magnet 14. This has a considerable impact on the pathway of the magnetic vector field lines. It can be seen that due to the layer 15 the magnetic vector field 32 is concentrated and focused between the surface mounted magnet 14 and the coil 23. Note that this can be verified by the closeness or the proximity between the magnet vector field lines in particular around the surface portion of the stator tooth 22 which is adjacent to the main gap 31.

To sum up Figures 3 and 4 it can be seen that due to the layer 15 a concentration and focusing of the magnetic vector field between the surface mounted magnet 14 and the coil 23 can be achieved. This may increase the efficiency of the electrical machine that comprises the surface mounted magnet 14 and the coils 23.

## Claims

1. Electrical machine comprising at least one permanent magnet and at least one coil (23),
wherein
- the permanent magnet and the coil (23) are configured to move relative to each other,
- the permanent magnet and the coil (23) are coupled by a magnetic flux during the relative movement to each other,
- a magnetic vector field in the permanent magnet and the coil (23) is generated due to the magnetic flux,
- the permanent magnet is separated by the coil (23) by a main gap (31),
- the permanent magnet comprises a main gap facing surface portion,
**characterized in that**
the main gap facing surface portion of the permanent magnet is at least partially covered by a layer (15) for concentrating the magnetic vector field in the permanent magnet and the coil (23), thus increasing the magnetic flux between the permanent magnet and the coil (23).

2. Electrical machine according to claim 1,
**characterized in that** the average thickness of the layer (15) is smaller than 20%, in particular smaller than 5%, of the average thickness of the permanent magnet on which the layer (15) is applied.

3. Electrical machine according to one of the preceding claims,
**characterized in that** the main gap facing surface portion is fully covered by the layer (15).

4. Electrical machine according to one of the preceding claims,
**characterized in that** the layer (15) comprises a relative permeability of greater than 10, in particular of greater than 100.

5. Electrical machine according to one of the preceding claims,
**characterized in that** the layer (15) comprises metal, in particular iron.

6. Electrical machine according to one of the preceding claims,
**characterized in that** the layer (15) comprises a coercivity which is smaller than 10 Ampere per meter, in particular smaller than 1 Ampere per meter.

7. Electrical machine according to one of the preceding claims,
**characterized in that** the layer (15) reduces the impact of a demagnetizing field on the permanent magnet.

8. Electrical machine according to one of the preceding claims,
**characterized in that** the relative movement of the permanent magnet and the coil (23) is a translatory movement.

9. Electrical machine according to one of the claims 1 to 7,
**characterized in that** the relative movement of the permanent magnet and the coil (23) is a rotational movement.

10. Electrical machine according to claim 9,
**characterized in that**
- the permanent magnet is a part of a rotor (10) which comprises a substantially rotationally symmetric shape,
- the coil (23) is a part of a stator (20) which comprises a substantially rotationally symmetric shape,
- the rotor (10) and the stator (20) are arranged such with regard to each other that their respective axes of symmetry substantially coincide, thus defining a common axis of symmetry, and
- the rotor (20) is rotatable mounted with regard to the stator (20).

11. Electrical machine according to claim 10,
**characterized in that** the rotor (10) is arranged further away from the common axis of symmetry compared to the stator (20).

12. Electrical machine according to claim 10,
**characterized in that** the stator (20) comprises at least one stator tooth (22) and the stator tooth (22) is enclosed by the coil (23) such that it acts as a coil core.

13. Electrical machine according to one of the preceding claims,
**characterized in that** the coil (23) is a preformed coil.

14. Electrical machine according to one of the preceding claims,
**characterized in that** the electrical machine is a generator for generating electricity.

15. Electrical machine according to one of the preceding claims,
**characterized in that** the electrical machine is a part of a wind turbine.

## Amended claims

### Amended claims in accordance with Rule 137(2) EPC.

1. Electrical machine comprising at least one permanent magnet and at least one coil (23),
wherein
- the permanent magnet and the coil (23) are configured to move relative to each other in a rotational movement,
- the permanent magnet and the coil (23) are coupled by a magnetic flux during the relative movement to each other,
- a magnetic vector field in the permanent magnet and the coil (23) is generated due to the magnetic flux,
- the permanent magnet is separated by the coil (23) by a main gap (31),
- the permanent magnet comprises a main gap facing surface portion and two side surface portions (143),
**characterized in that**
- the main gap facing surface portion of the permanent magnet is at least partially covered by a ferrous layer (15) for concentrating the magnetic vector field in the permanent magnet and the coil (23), thus increasing the magnetic flux between the permanent magnet and the coil (23),
- the ferrous layer does not cover the side surface portions (143), and
- the ferrous layer is interrupted between the permanent magnet and adjacent further permanent magnets, wherein the adjacent further permanent magnets also comprise ferrous layers (15) for concentrating the magnetic vector field.

2. Electrical machine according to claim 1,
**characterized in that** the main gap facing surface portion is fully covered by the layer (15).

3. Electrical machine according to claim 2,
**characterized in that** the average thickness of the layer (15) is smaller than 20%, in particular smaller than 5%, of the average thickness of the permanent magnet on which the layer (15) is applied.

4. Electrical machine according to one of the preceding claims,
**characterized in that** the layer (15) comprises a relative permeability of greater than 10, in particular of greater than 100.

5. Electrical machine according to one of the preceding claims,
**characterized in that** the layer (15) comprises a coercivity which is smaller than 10 Ampere per meter, in particular smaller than 1 Ampere per meter.

6. Electrical machine according to one of the preceding claims,
**characterized in that**
- the permanent magnet is a part of a rotor (10) which comprises a substantially rotationally symmetric shape,
- the coil (23) is a part of a stator (20) which comprises a substantially rotationally symmetric shape,
- the rotor (10) and the stator (20) are arranged such with regard to each other that their respective axes of symmetry substantially coincide, thus defining a common axis of symmetry, and
- the rotor (20) is rotatable mounted with regard to the stator (20).

7. Electrical machine according to claim 6,
**characterized in that** the rotor (10) is arranged further away from the common axis of symmetry compared to the stator (20).

8. Electrical machine according to claim 6,
**characterized in that** the stator (20) comprises at least one stator tooth (22) and the stator tooth (22) is enclosed by the coil (23) such that it acts as a coil core.

9. Electrical machine according to one of the preceding claims,
**characterized in that** the coil (23) is a preformed coil.

10. Electrical machine according to one of the preceding claims,
**characterized in that** the electrical machine is a generator for generating electricity.

11. Electrical machine according to one of the preceding claims,
**characterized in that** the electrical machine is a part of a wind turbine.
